# EUROPÄISCHE PATENTANMELDUNG

(11) **EP 4 491 899 A1**
(43) Veröffentlichungstag der Anmeldung: **15.01.2025**
(21) Anmeldenummer: 24187129.2
(22) Anmeldetag: 08.07.2024
(51) Int. Cl.: F16D 55/00, F16D 55/22, F16D 55/226, F16D 65/00, F16D 65/18, F16D 121/02

(54) **SCHEIBENBREMSE FÜR EIN KRAFTFAHRZEUG, SOWIE KRAFTFAHRZEUGE MIT EINER SCHEIBENBREMSE**

(30) Priorität: 12.07.2023 DE 102023118402
(71) Anmelder: ZF CV Systems Europe BV, 1170 Brüssel (BE)
(72) Erfinder: SCHERER, Vitalij, 69181 Leimen (DE)
(74) Vertreter: Schäferjohann, Volker

(57) **Zusammenfassung**

Die Erfindung bezieht sich auf eine Scheibenbremse (1, 1') für ein Kraftfahrzeug (100), insbesondere Festsattelbremse für ein Nutzfahrzeug (102), mit einem Bremssattel (6) und zwei am Bremssattel (6) aufgenommenen, relativ zueinander beweglichen Bremsbelägen (8, 8'), und einem Bremsenträger (10) zum Aufnehmen des Bremssattels (6), wobei der Bremsenträger (10) dazu eingerichtet ist, den Bremssattel (6) mit einem starren Achsteil (4) des Kraftfahrzeugs (100) zu koppeln.

Der Bremsenträger (10) und der Bremssattel (6) bilden ein einstückiges Gehäuseteil (12, 12') aus, welches dazu eingerichtet ist, eine mit den Bremsbelägen (8, 8') zusammenwirkende Bremsscheibe (2) zumindest teilweise einzuhausen.

## Beschreibung

Die Erfindung bezieht sich auf eine Scheibenbremse für ein Kraftfahrzeug, insbesondere eine Festsattelbremse für ein Nutzfahrzeug, mit einem Bremssattel, zwei am Bremssattel aufgenommenen, relativ zueinander beweglichen Bremsbelägen, und einem Bremsenträger zum Aufnehmen des Bremssattels, wobei der Bremsenträger dazu eingerichtet ist, den Bremssattel mit einem starren Achsteil des Kraftfahrzeugs zu koppeln.

Des Weiteren betrifft die Erfindung eine Anordnung umfassend einen Bremsenträger und einen Bremssattel für eine Scheibenbremse eines Kraftfahrzeugs sowie ein Kraftfahrzeug, insbesondere Nutzfahrzeug, mit einer Scheibenbremse.

Scheibenbremsen der vorbezeichneten Gattung sind hinreichend im Stand der Technik bekannt und werden an Kraftfahrzeugen, wie Personenkraftwagen oder Nutzfahrzeugen, zum Verzögern der Bewegung des Fahrzeugs eingesetzt. Bekannte Scheibenbremsen weisen dazu üblicherweise eine Bremsscheibe auf, welche rotierbar um eine durch ein Achsteil des Kraftfahrzeugs definierte Rotationsachse gelagert ist. Ferner weist die Scheibenbremse einen Bremssattel sowie zwei am Bremssattel aufgenommene, insbesondere zu beiden Seiten der Bremsscheibe relativ zueinander bewegliche Bremsbeläge auf. Die Bremsbeläge sind mittels eines Betätigungsmechanismus mit der Bremsscheibe in Reibwirkung bringbar, wodurch eine Bremswirkung zwischen den Bremsbelägen und der Bremsscheibe erzeugt wird und es damit zu der gewünschten Verzögerung der Fahrzeugbewegung kommt. Die Scheibenbremse umfasst des Weiteren einen Bremsenträger zum Aufnehmen des Bremssattels, wobei der Bremsenträger dazu eingerichtet ist, den Bremssattel mit dem starren Achsteil des Kraftfahrzeugs zu koppeln.

Je nach Ausgestaltung des Bremssattels ist dieser parallel zur Rotationsachse der Bremsscheibe feststehend oder schwimmend, also parallel zur Rotationsachse beweglich, gelagert. Durch die zwischen der Bremsscheibe und den Bremsbelägen erzeugte Bremswirkung entsteht üblicherweise Abrieb sowohl an den Bremsbelägen als auch der Bremsscheibe, der als Bremsstaub bezeichnet wird. Bremsstaub besteht zu einem wesentlichen Teil aus Staubpartikeln, die wegen ihrer relativ geringen Partikelgröße von < 10 µm als Feinstaub und zusätzlich wegen ihrer chemischen Zusammensetzung als gesundheitsgefährdend und umweltbelastend eingestuft sind. Die Abgabe des Bremsstaubs an die Umgebung ist daher unerwünscht und wenn möglich zu vermeiden.

Aus DE 10 2016 108 793 A1 ist beispielsweise eine Scheibenbremse für ein Fahrzeug bekannt, die einen Bremssattel und ein am Bremssattel befestigtes Bremsengehäuse aufweist. Durch den Bremssattel und das daran befestigte Bremsengehäuse wird die Bremsscheibe der Scheibenbremse allseits umschlossen, um die Abgabe von Bremsstaub an die Umgebung zu vermindern. Die konstruktive Anbindung des Bremssattels über das Bremsengehäuse an ein Achsteil des Fahrzeugs ist vergleichsweise aufwendig gestaltet, was die universelle Einsetzbarkeit eines solchen Bremsengehäuses begrenzt.

Der Erfindung lag demnach die Aufgabe zugrunde, eine Scheibenbremse für ein Kraftfahrzeug sowie eine Anordnung aus einem Bremssattel und einem Bremsenträger anzugeben, mittels denen das Kapseln der Scheibenbremse vereinfacht ist. Ferner soll die konstruktive Anbindung an ein Achsteil eines Kraftfahrzeugs vereinfacht werden. Zumindest soll zur bisher bekannten Lösung eine alternative Möglichkeit für die Ausgestaltung einer Scheibenbremse vorgeschlagen werden.

Die Erfindung löst die ihr zugrundeliegende Aufgabe bei einer Scheibenbremse für ein Fahrzeug, insbesondere ein Nutzfahrzeug, mit den Merkmalen nach Anspruch 1. Insbesondere bilden der Bremsenträger und der Bremssattel ein einstückiges Gehäuseteil aus, welches dazu eingerichtet ist, eine mit den Bremsbelägen zusammenwirkende Bremsscheibe zumindest teilweise einzuhausen.

Gemäß der vorliegenden Erfindung wird hier der Ansatz verfolgt, den Bremssattel und den den Bremssattel üblicherweise beweglich aufnehmenden Bremsenträger als einstückigen Gehäuseteil auszubilden, wodurch die konstruktive Anbindung des Bremsenträgers vereinfacht ist. Zudem entstehen durch die Einteiligkeit weniger Trennstellen bzw. Trennstellen mit so geringeren Spaltmaßen, wodurch der Austrag von Bremsstaub in die Umgebung entschieden vermindert wird.

Eine Weiterbildung der Scheibenbremse sieht vor, dass das Gehäuseteil als Gussteil ausgebildet ist. Durch die Ausgestaltung als Gussteil ist die konstruktive Anbindung zwischen Bremsenträger und Bremssattel weiter vereinfacht. Die sonst üblicherweise als Einzelteile ausgebildeten und häufig beweglich zueinander ausgeführten Bereiche der Scheibenbremse sind vorzugsweise miteinander zu einem einzigen Bauteil "verschmolzen". Trennstellen zwischen Bremssattel und Bremsenträger sind damit vermieden, was den Rückhalt des Bremsstaubs an der Scheibenbremse weiter verbessert. Dieses einzige Bauteil kann in einer bevorzugten Ausgestaltung Bestandteil eines die Bremsscheibe der Scheibenbremse vollständig umgebenden Gehäuses sein. Zudem ist mit der Ausgestaltung als Gussteil eine sichere Krafteinleitung und - übertragung in und von den den Bremssattel ausbildenden Bereichen des Gehäuseteils, an dem die Bremsbeläge aufgenommen sind, in den den Bremsenträger ausbildenden Bereich des Gehäuseteils bewirkt, der am Achsteil des Fahrzeugs befestigt wird.

Eine Weiterbildung der Scheibenbremse sieht vor, dass am Gehäuseteil ein Kopplungsabschnitt zum Befestigen eines mit zumindest einem der Bremsbeläge in Wirkverbindung bringbaren Betätigungsmechanismus, insbesondere Bremszylinder, vorgesehen ist. Der Kopplungsabschnitt wird auch als Sattelbox bezeichnet. Mittels des Kopplungsabschnitts erfolgt die Anbindung des Betätigungsmechanismus der Scheibenbremse an das zumindest aus Bremsenträger und Bremssattel, auch als Belaghalter bezeichnet, ausgebildete Gehäuseteil. Funktional erfolgt über den Kopplungsabschnitt insbesondere die mechanische Kraftübertragung der bevorzugt vom Betätigungsmechanismus erzeugten Betätigungskraft auf wenigstens einen am Gehäuseteil beweglich aufgenommenen Bremsbelag. Innerhalb des Kopplungsabschnitts ist dazu bevorzugt eine die Betätigungskraft von einem Bremszylinder auf den am Gehäuse beweglich aufgenommenen Bremsbelag übertragende Kinematik angeordnet, welche bevorzugt direkt auf den beweglich aufgenommenen Bremsbelag einwirkt. Der Kopplungsabschnitt selbst umfasst bevorzugt eine Montageschnittstelle für den daran zu montierenden Betätigungsmechanismus.

In einer bevorzugten Ausführungsform ist der Kopplungsabschnitt mit dem Gehäuseteil einstückig ausgebildet, was die Herstellung des Gehäuseteils weiter vereinfacht und sicherstellt, dass die auf das Gehäuseteil wirkenden Kräfte sicher eingeleitet bzw. aufgenommen und übertragen werden können.

Eine alternative Ausgestaltung der erfindungsgemäßen Scheibenbremse sieht vor, dass das Gehäuseteil eine Montageschnittstelle zum reversibel lösbaren Koppeln des Kopplungsabschnitts mit dem Gehäuseteil aufweist. Statt der vollständig einstückigen Ausgestaltung des Gehäuseteils ist zumindest der den Betätigungsmechanismus aufnehmende und dem Bremssattel zugeordnete Krafteinleitungsabschnitt als separates Bauteil zu dem sich demnach nur aus Bremssattel und Bremsenträger ausbildenden Gehäuseteil ausgebildet. Damit lassen sich auch von verschiedenen Fahrzeugherstellern an die Geometrie des Kopplungsabschnitts gestellte, unterschiedliche Anforderungen optimal umsetzen. Statt für verschiedene Fahrzeugtypen - wegen divergierender Anforderungen - jeweils unterschiedliche Gehäuseteile herstellen zu müssen, kann das aus Bremsenträger und Bremssattel ausgebildete Gehäuseteil bevorzugt als Standardteil gefertigt werden, wobei lediglich der Kopplungsabschnitt für den daran Betätigungsmechanismus als individuell anzupassendes Einzelteil auszuführen ist.

Gemäß einer bevorzugten Ausführung wird der separat zum Gehäuseteil ausgebildete Kopplungsabschnitt mithilfe von gängigen Verbindungselementen, wie beispielsweise Schraubverbindungen, an der Montageschnittstelle des Gehäuseteils befestigt. Dadurch kann insbesondere die gewünschte Ausrichtung bzw. der Ausrichtwinkel des Betätigungsmechanismus relativ zum Gehäuseteil sehr einfach variiert werden.

Gemäß einer bevorzugten Weiterbildung der Erfindung ist am Gehäuseteil ein Aufnahmebereich für die Bremsbeläge vorgesehen, innerhalb dessen einer der Bremsbeläge feststehend und der andere der Bremsbeläge beweglich aufgenommen ist. Der zumindest Bereiche des Bremssattels ausbildende Aufnahmebereich am Gehäuseteil wird mit seinen daran angeordneten Bremsbelägen zu beiden Seiten insbesondere einer Bremsscheibe angeordnet, welche ebenfalls Teil der Scheibenbremse ist. Trotz des nur einen beweglich am Gehäuseteil aufgenommenen Bremsbelags ist die vorliegende erfindungsgemäße Scheibenbremse als Festsattelbremse ausgebildet. Zwischen dem die Bremsbeläge aufnehmenden Aufnahmebereich und dem das Gehäuseteil mit dem Achsteil des Kraftfahrzeugs verbindenden Bremsenträger gibt es demnach keine relative Beweglichkeit. Damit ist das zumindest bereichsweise Kapseln der Bremsscheibe und den mit der Bremsscheibe zum Erzeugen einer Bremskraft in Wirkverbindung bringbaren Bremsbelägen weiter vereinfacht. Um an der erfindungsgemäßen Ausgestaltung mit ihrem nur einseitig beweglich am Gehäuseteil aufgenommenen Bremsbelag dem im Betrieb der Scheibenbremse auftretenden Verschleiß und den damit größer werdenden Spaltmaßen entgegenzuwirken, ist gemäß der Erfindung vorgesehen, dass an der bevorzugt als Festsattelbremse ausgebildeten Scheibenbremse die Bremsscheibe axial verschieblich entlang des die Bremsscheibe tragenden Achsteils des Kraftfahrzeugs gelagert ist.

Insbesondere beim Betätigen einer derartig ausgebildeten Festsattelbremse wird der am Gehäuseteil beweglich aufgenommene Bremsbelag, welcher auf der dem Kopplungsabschnitt für den Betätigungsmechanismus zugewandten Seite des Gehäuseteils angeordnet ist, gegen die Bremsscheibe gedrückt. Durch die wirkende Druckkraft des zuspannseitigen Bremsbelags wird die axial bewegbare Bremsscheibe gegen den am Gehäuseteil feststehend aufgenommenen Bremsbelag gedrückt und sodann eine Reibwirkung erzielt.

Gemäß einer bevorzugten Ausführungsform der Scheibenbremse weist das Gehäuseteil einen Zugang zum Aufnahmebereich für die Bremsbeläge auf, wobei der Zugang durch ein Abdeckteil verschließbar ist. Insbesondere an der Oberseite des zumindest aus Bremssattel und Bremsenträger bestehenden Gehäuseteils ist ähnlich wie bei gängigen Bremssatteln ein Zugang zum Aufnahmebereich vorhanden, über den die Bremsbeläge an der erfindungsgemäßen Scheibenbremse gewechselt werden können. Der Zugang ist bevorzugt durch ein den Zugang vollständig abdeckendes Abdeckteil abdichtend verschließbar ausgebildet. Das Abdeckteil ist vorliegend aus einem Blechkörper ausgebildet, das mithilfe üblicher Befestigungsmittel am Gehäuseteil montiert werden kann. Eine Ausführung sieht vor, dass das Abdeckteil mit insbesondere an einer Seitenkante vorstehenden Vorsprüngen in entsprechend korrespondierende Ausnehmungen am Gehäuseteil eingreift. An einer gegenüberliegend ausgebildeten Seitenkante kann das Abdeckteil dann mithilfe von Schraubelementen am Gehäuseteil fixiert werden.

Eine bevorzugte Ausgestaltung der Scheibenbremse sieht vor, dass das Gehäuseteil mindestens eine die Bremsbeläge und die Bremsscheibe zumindest umfangsseitig abdeckende Umfangswand und zwei mit der Umfangswand längsseitig verbundene Seitenwände aufweist. Mithilfe der die Bremsbeläge und die Bremsscheibe abdeckenden Umfangswand und den zwei insbesondere parallel zueinander verlaufenden Seitenwänden ist ein Gehäuseteil ausgebildet, mit dem die Bremsbeläge und Bereiche der Scheibenbremse großflächig eingehaust werden können. Mithilfe des insbesondere wenige Trennstellen aufweisenden Gehäuseteils ist ein verbesserter Rückhalt des im Betrieb der Scheibenbremse entstehenden Bremsstaubs bewirkt. Die Umfangswand und die mit den Längsseiten der Umfangswand verbundenen Seitenwände sind gemäß der Erfindung entlang ihrer Verbindungsbereiche stoffschlüssig miteinander verbunden, womit die erfindungsgemäße Einstückigkeit des Gehäuseteils erreicht ist.

Vorzugsweise ist der Zugang zum Aufnahmebereich für die Bremsbeläge an der Umfangswand des Gehäuseteils ausgebildet. Insbesondere weist das den Zugang an der Umfangswand verschließbare Abdeckteil eine Form bzw. Kontur auf, welche für eine passgenaue Anlage an die Form der an den Zugang beiderseits benachbart angrenzenden Umfangswand angepasst ist.

Vorzugsweise erstrecken sich die Umfangswand und die Seitenwände bis auf Höhe der vom Achsteil definierten Rotationsachse, wobei Abweichungen von der Höhe um 20mm ebenfalls umfasst sind. Dadurch wird mittels des einstückig ausgebildeten Gehäuseteils vorzugsweise etwa die Hälfte der Bremsscheibe von ihrer Oberseite aus abgedeckt. Damit ist der vom Gehäuseteil eingehauste Bereich an der Scheibenbremse weiter vergrößert, was auch den Rückhalt des beim Bremsvorgang entstehenden Bremsstaubs weiter vereinfacht. Insbesondere können an einem die Scheibenbremse zumindest halbseitig abdeckenden Gehäuseteil mindestens ein Rückhaltesystem für den entstehenden Bremsstaub vorgesehen sein. Vorzugsweise sind das oder die Rückhaltesysteme entlang einer die Umfangswand und die Seitenwände des Gehäuseteils begrenzenden, umlaufenden Abschlusskante ausgebildet. Das Rückhaltesystem für den Bremsstaub kann zumindest ein sich bis an die Bremsscheibe berührungsfrei erstreckendes Dichtelemente aufweisen.

Gemäß einer bevorzugten Weiterbildung weisen die Seitenwände des Gehäuseteils jeweils eine an die Geometrie des das Gehäuseteil aufnehmenden starren Achsteils und einer am Achsteil drehbar gelagerten Radnabe angepasste, zentrale Ausnehmung auf. Die Ausnehmung an der dem starren Achsteil zugeordneten Seitenwand des Gehäuseteils kann direkt mit dem Achsteil in Anlage stehen. Damit ist die Abdichtwirkung und auch die Rückhaltefunktion des am Gehäuseteil bevorzugt ausgebildeten Rückhaltesystems verbessert. Die Ausnehmung an der Seitenwand, welche der am Achsteil drehbar gelagerten Radnabe zugeordnet ist, endet, ähnlich wie die angrenzenden, der Bremsscheibe zugeordneten insbesondere geradlinigen Abschlusskanten der Seitenwand, bevorzugt mit geringem Abstand von insbesondere wenigen Millimetern zur Radnabe. Damit ist eine berührungsfreie Abdichtfunktion im Bereich der Ausnehmung der Seitenwand und der dazu drehbar gelagerten Radnabe ermöglicht. Die jeweils an den Seitenwänden des Gehäuseteils ausgebildeten, zentralen Ausnehmungen weisen eine etwa halbkreisförmige Geometrie auf.

Eine bevorzugte Weiterbildung der Scheibenbremse sieht vor, dass das Gehäuseteil eine zumindest mit Abschnitten des Achsteils in Kontakt stehende Abdichtung umfasst. Die insbesondere unmittelbar mit einem Abschnitt des feststehenden Achsteils in Kontakt stehende Abdichtung ist Teil des den Bremsstaub an der erfindungsgemäßen Scheibenbremse aufnehmenden Rückhaltesystems. Durch die direkte Anlage zwischen den Bauteilen ist ein unkontrollierter Austritt des beim Bremsvorgang entstehenden Bremsstaubs aus dem Gehäuseteil entgegengewirkt. Die Abdichtung kann beispielsweise mithilfe einer gezielten Oberflächenbearbeitung der nicht zueinander rotierenden, sondern unmittelbar miteinander in Anlage gelangenden Bauteile erreicht werden.

Eine andere Ausgestaltung der Erfindung sieht vor, dass die Abdichtung zwischen zwei miteinander in Kontakt bringbaren Bauteilen oder zwischen einem feststehenden und einem sich dazu bewegenden, insbesondere drehenden Bauteil, mittels eines mit den Bauteilen in Kontakt bringbaren Dichtelements umsetzbar ist. Mithilfe eines solch separaten Dichtelements kann neben einer Abdichtfunktion zudem ein Ausgleich möglicher zwischen den Bauteilen vorhandener Maßtoleranzen erfolgen, beispielsweise zwischen der Montageschnittstelle am Gehäuseteil und dem daran zu montierenden Kopplungsabschnitt zum Befestigen des Betätigungsmechanismus.

Gemäß einer bevorzugten Ausgestaltung der Scheibenbremse ist vorgesehen, dass am Gehäuseteil ein oder mehrere Anbindungselemente für einen mit dem Gehäuseteil in Wirkverbindung bringbaren Filterkasten zum vollständig gekapselten Aufnehmen der Bremsscheibe vorgesehen sind. Die Anbindungselemente, welche beispielsweise als am Gehäuseteil ausgebildete Einschübe bzw. Hinterschneidungen für damit korrespondierende am Filterkasten vorstehende Materialvorsprünge oder auch als Bohrungen ausgebildete Materialausnehmungen zum Zusammenwirken mit den Filterkasten in Position haltenden Befestigungselementen ausgebildet sein können, ermöglichen eine konstruktiv einfache Anbindung eines mit dem Gehäuseteil koppelbaren Filterkastens. Zudem ist mittels der Anbindungselemente eine sichere Verbindung am Gehäuseteil erzielt. Der Filterkasten wird etwa auf Höhe der vom Achsteil definierten Rotationsachse mit der Abschlusskante von Umfangswand und Seitenwänden am Gehäuseteil in Anlage gebracht und ist in Bezug auf seine grundlegende äußere Formgebung ähnlich dem zumindest aus Bremsenträger und Bremssattel bestehenden Gehäuseteil ausgebildet. Der Filterkasten kommt insbesondere zur Anwendung, wenn an dem Gehäuseteil selbst kein Rückhaltesystem für den beim Bremsvorgang entstehenden Bremsstaub vorgesehen ist, wobei der Filterkasten zur Aufnahme eines Filtermaterials ausgebildet ist.

In einer Ausführung weist der Filterkasten mit den Abschlusskanten der Umfangswand und der Seitenwände in Kontakt bringbare Wandteile für eine gekapselte Aufnahme der Scheibenbremse am Kraftfahrzeug auf. Vorzugsweise sind am Filterkasten und/oder dem Gehäuseteil Be- und/oder Entlüftungsöffnungen für eine Luftzirkulation innerhalb des gekapselten Gehäuses vorgesehen, um die beim Bremsvorgang des Fahrzeugs entstehende Wärme gezielt aus dem Inneren des aus Gehäuseteil und Filterkasten ausgebildeten gekapselten Gehäuses abzuführen.

Ein weiterer Aspekt der vorliegenden Erfindung betrifft eine Anordnung umfassend einen Bremsenträger und einen Bremssattel für eine Scheibenbremse eines Kraftfahrzeugs nach einer der vorstehenden, oben beschriebenen bevorzugten Ausführungsformen.

Die Erfindung löst die eingangs beschriebene Aufgabe, indem der Bremsenträger und der Bremssattel ein einstückiges Gehäuseteil ausbilden, welches dazu eingerichtet ist, eine mit den Bremsbelägen zusammenwirkende Bremsscheibe zumindest teilweise einzuhausen. Mithilfe der erfindungsgemäßen Ausgestaltung der Anordnung aus Bremsenträger und Bremssattel als einstückiges Gehäuseteil ist die konstruktive Anbindung eines Bremssattels und eines den Bremssattel aufnehmenden Bremsenträgers an einem starren Achsteil eines Kraftfahrzeugs vereinfacht. Zudem sind eine geringere Anzahl an Trennstellen zwischen dem Bremssattel und dem Bremsenträger ausgebildet, wodurch wenige Verbindungsstellen und daraus resultierende Abdichtstellen vorhanden sind. Der Bremssattel und der Bremsenträger bilden zumindest eine aus einzelnen Bauteilen starr miteinander verbundene Bauteileinheit aus. In einer bevorzugten Ausgestaltung ist das aus Bremssattel und Bremsenträger bestehende Gehäuseteil als Gussteil ausgebildet.

Die zu den erfindungsgemäßen Scheibenbremsen des ersten Aspekts beschriebenen Vorteile und bevorzugten Ausführungsformen sind zugleich auch Vorteile und bevorzugte Ausführungsformen der Anordnung aus Bremsenträger und Bremssattel gemäß dem zweiten Aspekt und umgekehrt, weswegen zur Vermeidung von Wiederholungen diesbezüglich auf die obigen Ausführungen zur Scheibenbremse verwiesen wird.

Ferner betrifft die Erfindung in einem dritten Aspekt ein Fahrzeug, insbesondere ein Nutzfahrzeug, mit einer Scheibenbremse nach einer der vorstehend beschriebenen bevorzugten Ausführungsformen.

Die zu den erfindungsgemäßen Scheibenbremsen des ersten Aspekts beschriebenen Vorteile und bevorzugten Ausführungsformen sind zugleich auch Vorteile und bevorzugte Ausführungsformen des Fahrzeugs gemäß dem dritten Aspekt und umgekehrt.

Die in der Beschreibung, in den Zeichnungen sowie in den Ansprüchen offenbarten Merkmale der Erfindung können sowohl einzeln als auch in beliebiger Kombination miteinander für die Weiterbildung der Erfindung wesentlich sein, sofern sie sich technisch nicht widersprechen.

Die Erfindung wird nun im Folgenden anhand verschiedener Ausführungsbeispiele unter Bezugnahme auf die beigefügten Figuren näher beschrieben. Hierbei zeigen:
- Fig. 1: eine perspektivische Ansicht einer ersten Ausführungsform einer erfindungsgemäßen Scheibenbremse,
- Fig. 2 und 3: perspektivische Ansichten des erfindungsgemäßen Gehäuseteils nach Fig. 1,
- Fig. 4: eine perspektivische Ansicht einer zweiten Ausführungsform einer erfindungsgemäßen Scheibenbremse und
- Fig. 5 und 6: perspektivische Ansichten eines erfindungsgemäßen Gehäuseteils gemäß Fig. 4.
- Fig. 7: eine Ansicht eines Fahrzeugs mit einer erfindungsgemäßen Scheibenbremse.

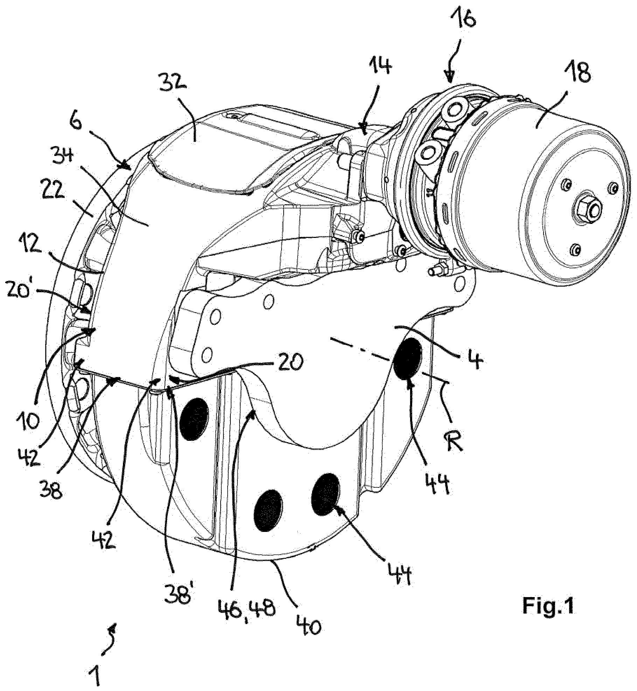

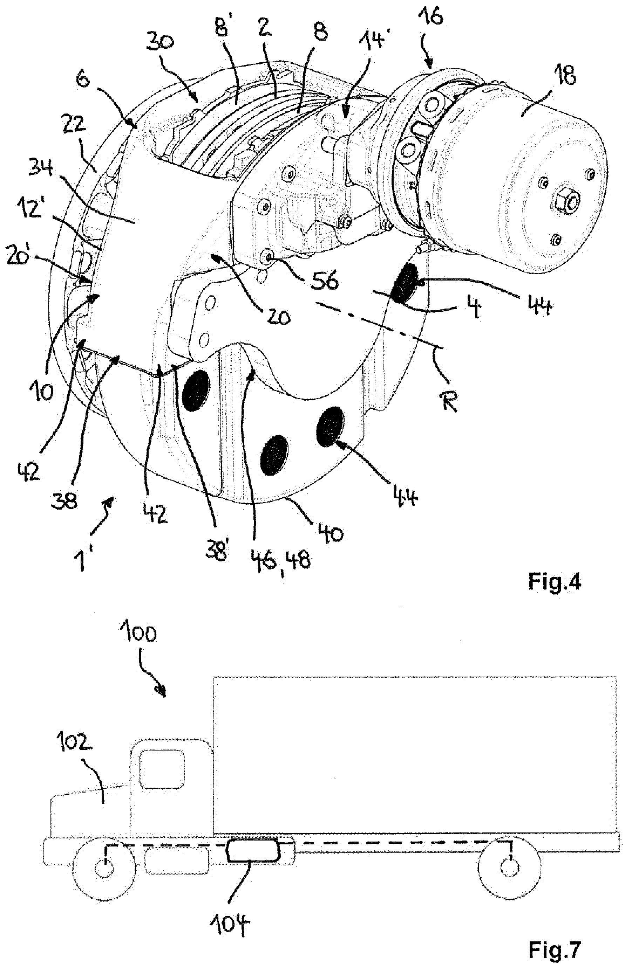

Fig. 1 zeigt eine Scheibenbremse 1 für ein in Fig. 7 gezeigtes Fahrzeug 100, insbesondere ein Nutzfahrzeug 102, wobei die Scheibenbremse 1 eine näher in Fig. 4 gezeigte Bremsscheibe 2 aufweist, welche rotierbar um eine durch ein Achsteil 4 des Fahrzeugs 100 definierte Rotationsachse R gelagert ist. Die Scheibenbremse 1 weist ferner einen Bremssattel 6 und zwei am Bremssattel 6 relativ zueinander beweglich aufgenommene Bremsbeläge 8, 8' (Fig.4) sowie einen Bremsenträger 10 auf.

Der Bremsenträger 10 und der Bremssattel 6 bilden in der vorliegenden Ausführung ein einstückiges Gehäuseteil 12 aus, mittels dessen die mit den Bremsbelägen 8, 8' zusammenwirkende Bremsscheibe 2 (Fig.4) zumindest teilweise eingehaust wird. Am Gehäuseteil 12 ist ein Kopplungsabschnitt 14 zum Befestigen eines Betätigungsmechanismus 16, insbesondere eines Bremszylinders 18, zum Betätigen mindestens eines der Bremsbeläge 8, 8' vorgesehen. Das Gehäuseteil 12 ist mit einer Stirnseite 20 an dem starren Achsteil 4 des Fahrzeugs 100 befestigt, wohingegen an der gegenüberliegenden Stirnseite 20' sich eine am Achsteil 4 drehbar gelagerte Radnabe 22 erstreckt.

Wie aus den Fig. 1 bis 3 ersichtlich, ist in der vorliegend gezeigten Ausführung der Kopplungsabschnitt 14 ebenfalls einteilig mit dem aus dem Bremssattel 6, dem Bremsenträger 10 und dem Kopplungsabschnitt 14 bestehenden Gehäuseteil 12 ausgebildet. Das Gehäuseteil 12 ist in der vorliegend gezeigten Ausführung als Gussteil ausgeführt.

Zudem ist an dem den Bremssattel 6 ausbildenden Abschnitt des Gehäuseteils 12 ein Aufnahmebereich 24 für die daran aufgenommenen, relativ zueinander beweglichen Bremsbeläge 8, 8' vorgesehen. Innerhalb des Aufnahmebereichs 24 ist der Bremsbelag 8, der auf der dem Kopplungsabschnitt 14 zugewandten Seite angeordnet ist, beweglich aufgenommen. Der auf der von dem Kopplungsabschnitt 14 abgewandten Seite angeordnete Bremsbelag 8' ist innerhalb des Aufnahmebereichs 24 feststehend angeordnet.

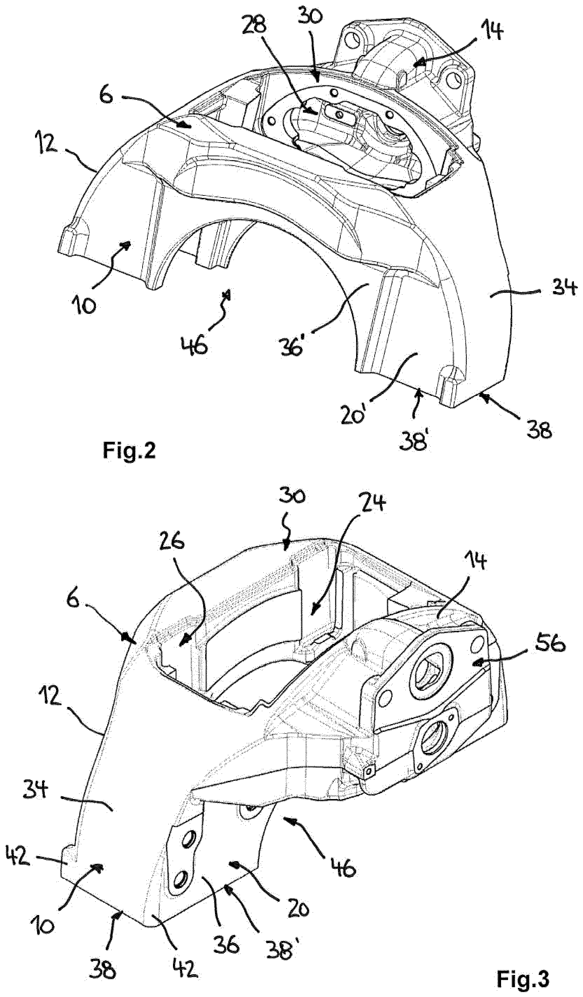

Das zumindest aus dem Bremssattel 6 und dem Bremsenträger 10 bestehende Gehäuseteil 12 weist im Aufnahmebereich 24 eine mit einem nicht näher gezeigten Belagträger des feststehenden Bremsbelags 8' zugeordnete Stützfläche 26 auf. Wie Fig. 2 zeigt, ist auf der dem Kopplungsabschnitt 14 für den Betätigungsmechanismus 16 zugewandten Seite des Gehäuseteils 12 eine Ausnehmung 28 für eine mit dem beweglich aufgenommenen Bremsbelag 8 zusammenwirkende nicht näher gezeigte Kinematik des Betätigungsmechanismus vorgesehen, welche die vom Bremszylinder 18 erzeugte Betätigungskraft auf den beweglich aufgenommenen Bremsbelag 8 der Scheibenbremse 1 überträgt.

Das Gehäuseteil 12 weist im montierten Zustand an seiner Oberseite ferner einen Zugang 30 zum Aufnahmebereich 24 auf, wobei der Zugang 30 durch ein in Fig. 1 gezeigtes Abdeckteil 32 verschließbar ausgebildet ist. Der Zugang 30 ist in seinen Abmessungen derart groß gewählt, dass er einen Austausch der im Aufnahmebereich 24 aufgenommenen Bremsbeläge 8, 8' ermöglicht. Das Abdeckteil 32 weist eine insbesondere an die umfangsseitige Formgebung des Gehäuseteils 12 angepasste, im Wesentlichen gekrümmte Kontur auf.

Wie die Fig. 1 bis 3 weiter zeigen, weist das Gehäuseteil 12 eine die Bremsbeläge 8, 8' und die Bremsscheibe 2 zumindest umfangsseitig abdeckende Umfangswand 34 und zwei längsseitig mit der Umfangswand 34 verbundene Seitenwände 36, 36' auf. Die Umfangswand 34 und die Seitenwände 36, 36' erstrecken sich mit ihren Abschlusskanten 38, 38', wie in Verbindung mit Fig. 1 verdeutlicht wird, bis etwa auf Höhe der vom Achsteil definierten Rotationsachse R.

Die Abschlusskante 38 an der Umfangswand 34 und die Abschlusskanten 38' an den Seitenwänden 36, 36' sind zur Anlage mit einem mit dem Gehäuseteil 12 zusammenwirkenden Filterkasten 40 (Fig.1) eingerichtet. Mittels des Filterkastens 40 wird die aus dem Gehäuseteil 12 vorstehende Bremsscheibe 2 umfangsseitig und stirnseitig vollständig eingehaust. Der Filterkasten 40 wird mithilfe von Anbindungselementen 42 am Gehäuseteil 12 befestigt. In einer Ausführung weist der Filterkasten 40 Be- und/oder Entlüftungsöffnungen 44 auf.

Wie aus den Fig. 2 und 3 zu entnehmen, weist das Gehäuseteil 12 an seinen Seitenwänden 36, 36' eine zentrale Ausnehmung 46 auf. Die Seitenwand 36 bildet mit ihrer Ausnehmung 46 eine Abdichtung 48 (Fig. 1) mit dem das Gehäuseteil 12 aufnehmenden, starren Achsteil 4 aus. Die Seitenwand 36' bildet mit ihrer Ausnehmung 46 ebenfalls eine nicht näher gezeigte Abdichtung mit der am Achsteil 4 drehbar gelagerten Radnabe 22 aus, wobei die Abdichtung zwischen Radnabe und Seitenwand berührungsfrei ausgebildet ist. Zwischen der Seitenwand 32' und der Radnabe 22 ist dazu ein minimales Spaltmaß ausgebildet.

Fig. 4 zeigt eine weitere Ausführungsform einer erfindungsgemäßen Scheibenbremse 1'. Hinsichtlich der grundsätzlichen Ausgestaltung und Funktion der Scheibenbremse 1' wird auf die Ausführungen zu der in den Fig. 1 bis 3 gezeigten Scheibenbremse 1 verwiesen.

Der Bremssattel 6 und der Bremsenträger 10 bilden ebenfalls ein einstückiges Gehäuseteil 12' in Form eines Gussteils aus, das die mit den Bremsbelägen 8, 8' zusammenwirkende Bremsscheibe 2 zumindest teilweise einhaust. Der Kopplungsabschnitt 14' ist, anders als in den Figuren 1 bis 3 gezeigt, als separates Bauteil ausgebildet. Das Gehäuseteil 12' ist mit einer Stirnseite 20 an dem starren Achsteil 4 des Fahrzeugs 100 befestigt, wohingegen an der gegenüberliegenden Stirnseite 20' sich eine am Achsteil 4 drehbar gelagerte Radnabe 22 erstreckt.

Auch das Gehäuseteil 12' weist, wie bei der vorherigen Ausführungsform, einen Kopplungsabschnitt 14' zum Befestigen eines mit zumindest einem der Bremsbeläge 8, 8' in Wirkverbindung bringbaren Betätigungsmechanismus 16 auf. Im Gegensatz zu der vorherigen Ausführungsform weist das Gehäuseteil 12' eine Montageschnittstelle 50 zum reversibel lösbaren Koppeln des Kopplungsabschnitts 14' mit dem Gehäuseteil 12' auf. Der Kopplungsabschnitt 14' ist somit über die Montageschnittstelle 50 mit dem Gehäuseteil 12' reversibel koppel- und wieder entkoppelbar.

Die Montageschnittstelle 50 am Gehäuseteil 12' weist eine ebene Anlagefläche 52 auf, die mit einer am Kopplungsabschnitt 14' korrespondierend ausgebildeten Kontaktfläche 54 in Anlage bringbar ist. Die Verbindung im Bereich der Montageschnittstelle 50 zwischen dem Gehäuseteil 12 und dem Kopplungsabschnitt 14 erfolgt mithilfe entsprechender Befestigungselemente 56, wie beispielsweise Schrauben oder dergleichen.

Der in den Fig. 1 bis 6 gezeigte Kopplungsabschnitt 14, 14' weist seinerseits eine Montageschnittstelle 58 zum Montieren des mit dem Kopplungsabschnitt 14, 14' zu befestigenden Betätigungsmechanismus 16 auf.

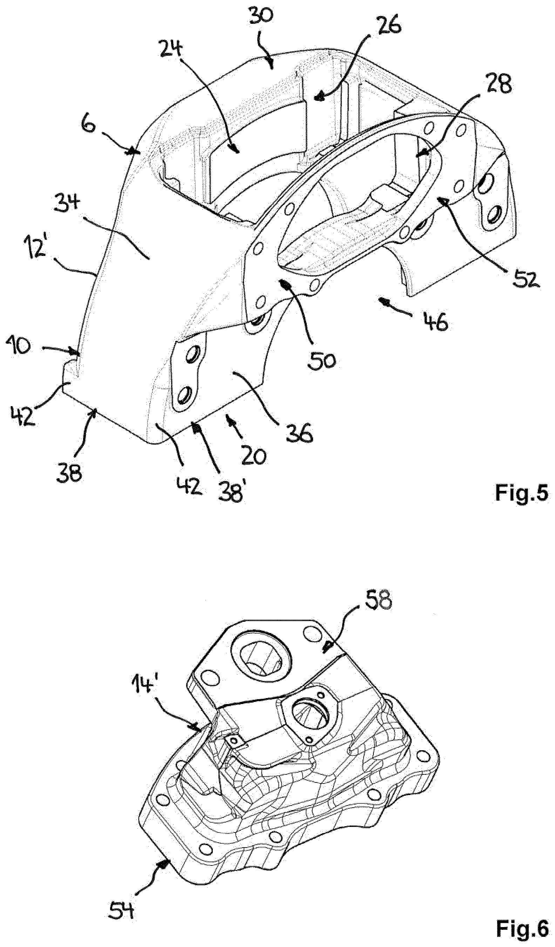

Fig. 5 und 6 zeigen das Gehäuseteil 12' und den Kopplungsabschnitt 14' in einem voneinander entkoppelten Zustand. Zudem ist an dem den Bremssattel 6 ausbildenden Abschnitt des Gehäuseteils 12' ein Aufnahmebereich 24 für die daran aufgenommenen, relativ zueinander beweglichen Bremsbeläge 8, 8' vorgesehen. Zudem weist das Gehäuseteil 12' im montierten Zustand an seiner Oberseite ebenfalls einen Zugang 30 zum Aufnahmebereich 24 auf, wobei der Zugang 30 durch ein in Fig. 1 gezeigtes Abdeckteil 32 verschließbar ausgebildet ist.

Das Gehäuseteil 12' weist des Weiteren eine Umfangswand 34 und zwei längsseitig mit der Umfangswand 34 verbundene Seitenwände 36, 36' auf. Die Umfangswand 34 und die Seitenwände 36, 36' erstrecken sich mit ihren Abschlusskanten 38, 38', wie in Verbindung mit Fig. 4 verdeutlicht wird, bis etwa auf Höhe der vom Achsteil definierten Rotationsachse R. In Bezug auf weiterführende Ausgestaltungen des Gehäuseteils 12' wird auf die obigen Ausführungen zu dem in Fig. 1 bis 3 gezeigten Gehäuseteil 12 verwiesen.

Fig. 7 zeigt eine schematische Darstellung eines Fahrzeugs 100, insbesondere eines Nutzfahrzeugs 102. Das Fahrzeug 100 ist mit einem Bremssystem 104 ausgerüstet, das eine in den Fig. 1 bis 6 gezeigte, erfindungsgemäße Ausführungsform einer Scheibenbremse 1, 1' aufweist.

### Bezugszeichen (Teil der Beschreibung)

- 1, 1': Scheibenbremse
- 2: Bremsscheibe
- 4: Achsteil
- 6: Bremssattel
- 8, 8': Bremsbelag
- 10: Bremsenträger
- 12, 12': Gehäuseteil
- 14, 14': Kopplungsabschnitt (Sattelbox)
- 16: Betätigungsmechanismus
- 18: Bremszylinder
- 20, 20': Stirnseite
- 22: Radnabe
- 24: Aufnahmebereich
- 26: Stützfläche
- 28: Ausnehmung
- 30: Zugang
- 32: Abdeckteil
- 34: Umfangswand
- 36, 36`: Seitenwand
- 38, 38`: Abschlusskante
- 40: Filterkasten
- 42: Anbindungselement
- 44: Be-/Entlüftungsöffnung
- 46: Ausnehmung
- 48: Abdichtung
- 50, 58: Montageschnittstelle
- 52: Anlagefläche
- 54: Kontaktfläche
- 56: Befestigungselement
- 100: Fahrzeug
- 102: Nutzfahrzeug
- 104: Bremssystem
- R: Rotationsachse

## Patentansprüche

1. Scheibenbremse (1, 1') für ein Kraftfahrzeug (100), insbesondere Festsattelbremse für ein Nutzfahrzeug (102), mit
einem Bremssattel (6) und zwei am Bremssattel (6) aufgenommenen, relativ zueinander beweglichen Bremsbelägen (8, 8'), und
einem Bremsenträger (10) zum Aufnehmen des Bremssattels (6), wobei der Bremsenträger (10) dazu eingerichtet ist, den Bremssattel (6) mit einem starren Achsteil (4) des Kraftfahrzeugs (100) zu koppeln,
**dadurch gekennzeichnet, dass** der Bremsenträger (10) und der Bremssattel (6) ein einstückiges Gehäuseteil (12, 12') ausbilden, welches dazu eingerichtet ist, eine mit den Bremsbelägen (8, 8') zusammenwirkende Bremsscheibe (2) zumindest teilweise einzuhausen.

2. Scheibenbremse (1, 1 ') nach Anspruch 1,
**dadurch gekennzeichnet, dass** das Gehäuseteil (12, 12') als Gussteil ausgebildet ist.

3. Scheibenbremse (1, 1') nach Anspruch 1 oder 2,
**dadurch gekennzeichnet, dass** am Gehäuseteil (12, 12') ein Kopplungsabschnitt (14, 14') zum Befestigen eines Betätigungsmechanismus (16) vorgesehen ist.

4. Scheibenbremse (1) nach Anspruch 3,
**dadurch gekennzeichnet, dass** der Kopplungsabschnitt (14) mit dem Gehäuseteil (12) einstückig ausgebildet ist.

5. Scheibenbremse (1') nach Anspruch 3,
**dadurch gekennzeichnet, dass** das Gehäuseteil (12') eine Montageschnittstelle (50) zum reversibel lösbaren Koppeln des Kopplungsabschnitts (14') mit dem Gehäuseteil (12') aufweist.

6. Scheibenbremse (1, 1 ') nach einem der vorstehenden Ansprüche,
**dadurch gekennzeichnet, dass** am Gehäuseteil (12, 12') ein Aufnahmebereich (24) für die Bremsbeläge (8, 8') vorgesehen ist, innerhalb dem einer der Bremsbeläge (8, 8') feststehend und der andere der Bremsbeläge (8, 8') beweglich aufgenommen ist.

7. Scheibenbremse nach Anspruch 6,
**dadurch gekennzeichnet, dass** das Gehäuseteil (12, 12') einen Zugang (30) zum Aufnahmebereich (24) aufweist, wobei der Zugang (30) durch ein Abdeckteil (32) verschließbar ist.

8. Scheibenbremse nach einem der vorstehenden Ansprüche,
**dadurch gekennzeichnet, dass** das Gehäuseteil (12, 12') mindestens eine die Bremsbeläge (8, 8') und die Bremsscheibe (2) zumindest umfangsseitig abdeckende Umfangswand (34) und zwei mit der Umfangswand (34) längsseitig verbundene Seitenwände (36, 36') aufweist.

9. Scheibenbremse nach Anspruch 8,
**dadurch gekennzeichnet, dass** sich die Umfangswand (34) und die Seitenwände (36, 36') bis auf Höhe der vom Achsteil (4) definierten Rotationsachse (R) erstrecken.

10. Scheibenbremse nach einem der vorstehenden Ansprüche,
**dadurch gekennzeichnet, dass** die Seitenwände (36, 36') des Gehäuseteils (12, 12') jeweils eine an die Geometrie des das Gehäuseteil (12, 12') aufnehmenden starren Achsteils (4) und einer am Achsteil (4) drehbar gelagerten Radnabe (22) angepasste, zentrale Ausnehmung (46) aufweisen.

11. Scheibenbremse nach einem der vorstehenden Ansprüche,
**dadurch gekennzeichnet, dass** das Gehäuseteil (12, 12') eine zumindest mit Abschnitten des Achsteils (4) in Kontakt stehende Abdichtung (48) umfasst.

12. Scheibenbremse nach einem der vorstehenden Ansprüche,
**dadurch gekennzeichnet, dass** am Gehäuseteil (12, 12') ein oder mehrere Anbindungselemente (42) für einen mit dem Gehäuseteil (12, 12') in Wirkverbindung bringbaren Filterkasten (40) zum gekapselten Aufnehmen der Bremsscheibe (2) vorgesehen sind.

13. Anordnung umfassend einen Bremsenträger (10) und einen Bremssattel (6) für mindestens eine Scheibenbremse (1, 1') eines Kraftfahrzeugs (100), wobei der Bremsenträger (10) und der Bremssattel (6) ein einstückiges Gehäuseteil (12, 12') ausbilden, welches dazu eingerichtet ist, eine mit den Bremsbelägen (8, 8') zusammenwirkende Bremsscheibe (2) zumindest teilweise einzuhausen.

14. Fahrzeug (100), insbesondere Nutzfahrzeug (102), mit einer Scheibenbremse (1, 1') nach einer der vorstehenden Ansprüche 1 bis 12.
